# EUROPEAN PATENT SPECIFICATION

(11) **EP 1 426 618 B1**
(45) Date of publication and mention of the grant of the patent: **17.03.2010**
(21) Application number: 03257418.8
(22) Date of filing: 25.11.2003
(51) Int. Cl.: F04B 39/00, F04B 27/10

(54) **Lip seal lubrification reservoir and method of level control**
Lippendichtringschmierungsbehälter und Niveauregelanlage dafür
Réservoir de lubrifiant pour un joint à lèvre et son système de régulation du niveau

(30) Priority: 02.12.2002 US 307688
(43) Date of publication of application: 09.06.2004
(73) Proprietor: CARRIER CORPORATION, Farmington, Connecticut 06034-4015 (US)
(72) Inventor: Wyker, Christopher A, Liverpool, New York 13088 (US); Wright, Kenneth A., Syracuse, New York 13207 (US); Duppert, Ronald J., Fayetteville, New York 13066 (US)
(74) Representative: Leckey, David Herbert

(56) References cited:
- EP-A- 1 197 659
- DE-A1- 10 149 010
- US-A- 4 019 342

## Description

### BACKGROUND OF THE INVENTION

### 1. Field of the Invention

The present invention relates to lubrication of a compressor lip seal. More particularly, the present invention concerns a reservoir and drainage system for adequately lubricating a compressor lip seal while not over-saturating the lip seal.

### 2. Background Art

Refrigeration systems, such as the type used in transport refrigeration equipment, include, in the simplest form, a compressor, a condenser, an expansion device and an evaporator serially interconnected to form a closed refrigeration circulation path. In systems that use a reciprocating type compressor, these systems must be lubricated by a lubricating oil which mixes with the refrigerant being compressed therein.

A typical reciprocating compressor includes a piston reciprocating within a cylinder for mechanically compressing gaseous refrigerant. Appropriate manifolds and valves are provided to allow gas to be drawn into the cylinder during the down stroke of the piston and to be compressed during the up stroke.

Oil is used in such compressors to lubricate the various parts and interfaces there between. To maintain refrigerant pressure within the compressor in an open drive configuration where the drive is external to the compressor, a mechanical shaft seal is used. The compressor oil pump deploys an oil film to seal against the leakage of pressurized gas and to lubricate the faces of the seal during operation. For example, mechanical shaft seals are used on the crankshaft of the compressor where the crankshaft exits the compressor crankcase in the vicinity of the gland plate. Crankshafts of such compressors may also employ additional seals, typically a lip seal, for keeping external contamination out of the compressor. Accordingly, lip seals are usually the last line of defense of the internal workings of the compressor and are external to the mechanical shaft seal and most typically located at the gland plate assembly. EP 1 197 659 discloses a compressor having rotary shaft and seals including a lip seal. The compressor further has a seal cooling structure by which refrigerant and lubricant flow over the seals. Claim 1 is characterised over this disclosure.

In the prior art, lip seals have the tendency to prematurely wear, requiring compressor maintenance. Premature wear from friction between the crankshaft and the lip seal can lead to the intrusion of dirt into the compressor cavity, damaging the inner mechanisms of the compressor, and/or allowing excessive leakage of oil to the compressor exterior.

It is an object of the present invention to improve the life of compressor lip seals.

It is a further object of the present invention to provide a mechanism to lubricate compressor lip seals to increase lip seal life and reduce compressor maintenance.

It is another object of the present invention to lubricate but not over lubricate compressor lip seals by providing a mechanism for control over the amount of lubrication the lips seals receive.

It is another object of the present invention to provide a reservoir and drainage passage in the vicinity of a lip seal to provide adequate but not excessive lubrication thereto.

These and other objects of the present invention are achieved according to the system for lubricating a crankshaft lip seal having surfaces with a lubricant used with the crankshaft provided in the present invention. In accordance with the present invention, there is provided a system for lubricating a crank shaft seal as claimed in claim 1. In its preferred embodiments at least, the system includes a compressor housing portion, wherein the lip seal is secured in the compressor housing portion for engagement with the crankshaft and a structure in the compressor housing portion for adequately providing lubricant to the lip seal wear surfaces. In a preferred embodiment the structure includes a bore having an internal reservoir for maintaining the lubricant in contact with the lip seal. To control the amount of the lubricant in the reservoir, there is a passageway that is oriented such that an oil store will be maintained to supply the lubricant.
FIG. 1 is a schematic, partially cross-sectional view of a reciprocating compressor incorporating the device of the present invention;
FIG 2 is an enlarged, partially cross-sectional view of the crankshaft seal area of FIG. 1, including the lip seal;
FIG. 3 is a further enlarged view of the shaft seal and lip seal mechanism; and
FIG. 4 is an end, partial cross-sectional view of the lip seal and reservoir taken along line 4-4 of FIG. 3.

The invention as described herein will refer to a reciprocating compressor for use with an air conditioning or refrigeration system. Although this compressor is shown in a configuration and described relative to incorporation with a refrigeration circuit within an air conditioning system or a refrigeration system it is to be understood that this method of oil collection, lubrication and diversion is equally applicable to other types of compressors, pumps and other applications.

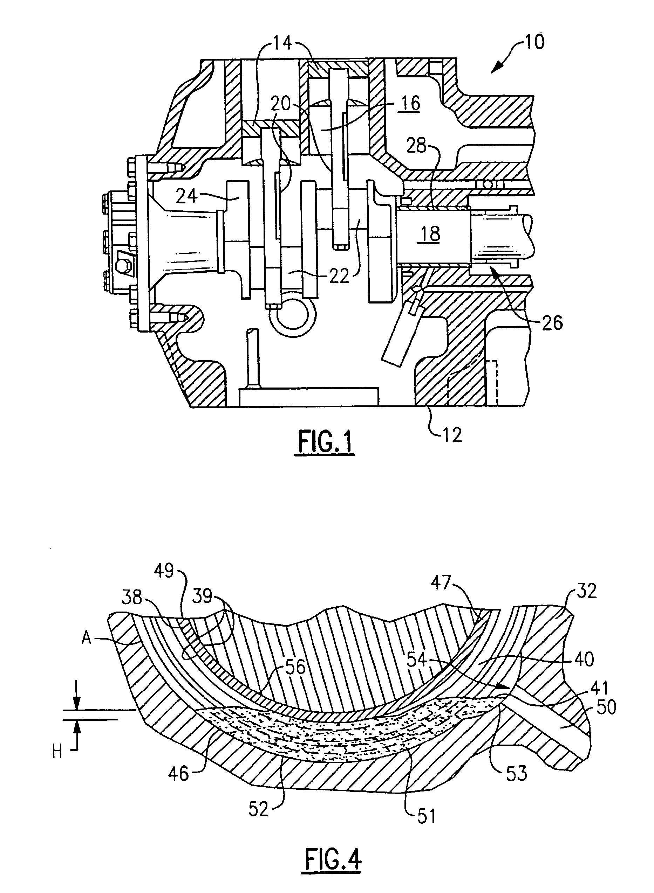

Referring now to FIG. 1, shown is a compressor 10 including shell 12. Working pistons 14 are mounted for reciprocating movement within cylinders 16. Each piston is connected to crankshaft 18 via a connecting rod 20. Connecting rod 20 is secured around offset portion 22 of crankshaft 18. Crankshaft 18 includes counterbalance 24 for balancing the rotational irregularities in the crankshaft. The crankshaft is mounted and rotates within sleeve 28 and extends through shaft seal cavity 26 of housing 12.

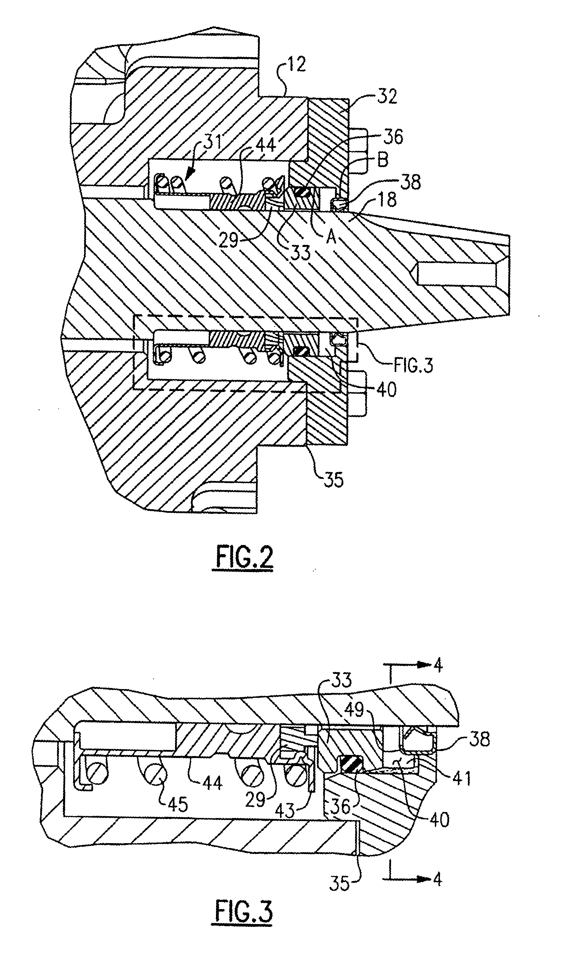

Referring to FIG. 2 and 4, the crankshaft seal mechanism 31 is shown in greater detail at the point where the housing 12 is exited by the crankshaft. The crankshaft 18 passes through the mechanical shaft seal spring assembly 45, shaft seal faces 29 and 33, gland plate 32 and lip seal 38 having wear surfaces 39. As shown in FIG. 3, a gland plate gasket 35 is used to prevent seepage between the housing and the gland plate. The face seal 33 is substantially cylindrical in shape and includes an O-ring 36, which holds it stationary within inner diameter A of the gland plate 32. The lip seal 38, secured in gland plate 32 adjacent to but spaced from diameter A, in smaller diameter B, has the function of preventing dirt from entering the shaft seal cavity. An inner disc-shaped space 40 is located between face seal 33 and lip seal 38 and is an internal reservoir for lubricant storage, discussed in further detail below.

The crankshaft seal mechanism further includes a cylindrical body 44 formed from a resilient material, using oil between it and the crankshaft to act as a refrigerant seal. The spring 45 wrapped around the exterior of the body 44 and resting against the crankshaft seal thrust face 43 provides axial loading between the two shaft face seals 29 and 33. The two face seals are loaded such that, with the use of oil, they will act as a refrigerant seal. Due, however, to a pressure differential, oil passes across the two shaft face seal surfaces as they seal against refrigerant leakage, and excess oil collects in the seal cavity reservoir 41, and passes to the lip seal/crank-shaft interface when the oil level exceeds the reservoir capacity.

The invention as provided herein operates to utilize the transferred oil passed through the seal interface to lubricate and extend the life of the lip seal. Referring to FIG. 4, in accordance with the principles of the present invention, reservoir 41 is formed by a recess 46 provided around and, most importantly, at the base of the lip seal 38, in the gland plate 32 to collect the excess oil. The recess 46 is provided in the preferred embodiment by an extension of diameter A, such that with lip seal 38 installed in diameter B, a portion of its body 47 extends into diameter A, as shown in FIGS. 2 and 3, causing the enlarged ring-shaped space 40. The circumference of space 40 is formed by diameter A, around the lip seal body portion 47. As the crankshaft rotates in the lip seal, this recess fill with oil and lubricates extension 49 and surfaces 39 of the lip seal. A passage 50 is provided in gland plate 32 that leads to a second passage (not shown) in housing 12, for drainage of the excess oil. Passage 50 is located at a height and angle such that the excess oil 51 in the bottom 52 of space 40 adequately lubricates the lip seal without over-saturating. Accordingly, in the preferred embodiment, passage 50 is positioned at approximately a 45° angle with the first corner 53 of the entrance 54 of the passage located at a height *H* above inner circumference 56 of the lip seal. Accordingly, the oil will be maintained at a constant level within space 48 to achieve the necessary lubrication while not over-saturating the lip seal.

While the invention has been described in reference to a preferred embodiment and a particular type of compressor, it is to be understood by those skilled in the art that modifications and variations can be effected within scope of the invention as defined in the appended claims and the invention could be applied to different types of compressors or other mechanisms incorporating similar type shaft seals.

## Claims

1. A system for lubricating a crankshaft lip seal (38) having wear surfaces (39) with a lubricant used with the crankshaft (18), comprising:
a housing portion, the lip seal (38) secured in said housing portion for engagement with the crankshaft (18); and
means in said housing portion for lubricating the lip seal surfaces (39), said means for lubricating comprises a reservoir (40) for maintaining said lubricant in contact with the lip seal (38); **characterised in that** the system further comprises:
means for controlling the amount of the lubricant in said reservoir (40).

2. The system according to claim 1, wherein said means for lubricating comprises a bore having the reservoir (40).

3. The system according to claim 1 or 2, wherein said means for controlling comprises a passage (50) for directing the lubricant from the reservoir (40).

4. The system according to claim 3, wherein said passage (50) is located at an angle and height relative to said reservoir (40) for maintaining an optimum level of lubricant in contact with the lip seal wear surfaces (39).

5. The system according to any preceding claim, wherein the housing portion is a compressor housing portion.

## Patentansprüche

1. System zum Schmieren einer Verschleißflächen (39) aufweisenden Kurbelwellen-Lippendichtung (38) mit einem an der Kurbelwelle (18) verwendeten Schmiermittel, aufweisend:
einen Gehäusebereich, wobei die Lippendichtung (38), in dem Gehäusebereich zum Zusammenwirken mit der Kurbelwelle (18) angebracht ist; und
eine Einrichtung in dem Gehäusebereich zum Schmieren der Lippendichtungsflächen (39), wobei die Schmiereinrichtung ein Reservoir (40) aufweist, um das Schmiermittel mit der Lippendichtung (38) in Kontakt zu halten;
**dadurch gekennzeichnet, dass** das System ferner Folgendes aufweist:
eine Einrichtung zum Steuern der Menge des Schmiermittels in dem Reservoir (40).

2. System nach Anspruch 1,
wobei die Schmiereinrichtung eine Bohrung besitzt, die das Reservoir (40) aufweist.

3. System nach Anspruch 1 oder 2,
wobei die Einrichtung zum Steuern eine Passage (50) aufweist, um das Schmiermittel aus dem Reservoir (40) zu leiten.

4. System nach Anspruch 3,
wobei die Passage (50) in einem Winkel und einer Höhe relativ zu dem Reservoir (40) vorgesehen ist, um einen optimalen Stand an Schmiermittel mit den Lippendichtungs-Verschleißflächen (39) in Kontakt zu halten.

5. System nach einem der vorausgehenden Ansprüche,
wobei es sich bei dem Gehäusebereich um einen Kompressorgehäusebereich handelt.

## Revendications

1. Système pour lubrifier un joint d'étanchéité à lèvre (38) de vilebrequin ayant des surfaces d'usure (39) avec un lubrifiant utilisé avec le vilebrequin (18), comprenant :
une partie de boîtier, le joint d'étanchéité à lèvre (38) étant fixé dans ladite partie de boîtier pour la mise en prise avec le vilebrequin (18) ; et
des moyens dans ladite partie de boîtier pour lubrifier les surfaces (39) du joint d'étanchéité à lèvre, lesdits moyens de lubrification comprennent un réservoir (40) pour maintenir ledit lubrifiant en contact avec le joint d'étanchéité à lèvre (38) ; **caractérisé en ce que** le système comprend en outre :
des moyens pour contrôler la quantité de lubrifiant dans ledit réservoir (40).

2. Système selon la revendication 1, dans lequel lesdits moyens de lubrification comprennent un alésage ayant le réservoir (40).

3. Système selon la revendication 1 ou 2, dans lequel lesdits moyens de contrôle comprennent un passage (50) pour diriger le lubrifiant à partir du réservoir (40).

4. Système selon la revendication 3, dans lequel ledit passage (50) est positionné selon un angle et une hauteur par rapport audit réservoir (40) pour maintenir un niveau optimal de lubrifiant en contact avec les surfaces d'usure (39) du joint d'étanchéité à lèvre.

5. Système selon l'une quelconque des revendications précédentes, dans lequel la partie de boîtier est une partie de boîtier de compresseur.
